(19) Europäisches Patentamt

European Patent Office

Office européen des brevets

(11) Veröffentlichungsnummer: **0 228 654 B1**

(12) **EUROPÄISCHE PATENTSCHRIFT**

(45) Veröffentlichungstag der Patentschrift: **12.06.91**

(21) Anmeldenummer: **86117572.7**

(22) Anmeldetag: **17.12.86**

(51) Int. Cl.⁵: **B29C 67/20**, B29C 43/30, B29B 17/00, B29B 13/10, B29B 9/12, //B29K27:06, B29K105:16

(54) Verfahren zum Herstellen von gefärbten Flächengebilden aus thermoplastischen Kunststoffen.

(30) Priorität: **27.12.85 DE 3546151**

(43) Veröffentlichungstag der Anmeldung:
**15.07.87 Patentblatt 87/29**

(45) Bekanntmachung des Hinweises auf die Patenterteilung:
**12.06.91 Patentblatt 91/24**

(84) Benannte Vertragsstaaten:
**AT BE CH DE ES FR GB IT LI LU NL SE**

(56) Entgegenhaltungen:
**EP-A- 0 124 371**
**AT-B- 301 855**
**DE-A- 1 704 939**
**DE-C- 887 265**

(73) Patentinhaber: **HÜLS TROISDORF AKTIENGE-SELLSCHAFT**
**Postfach 11 65**
**W-5210 Troisdorf(DE)**

(72) Erfinder: **Höver, Alexander**
**Eifelstrasse 25**
**W-5210 Troisdorf-Spich(DE)**
Erfinder: **Simon, Manfred, Dr.**
**Schellenberg 17**
**W-5216 Niederkassel(DE)**
Erfinder: **Weiss, Richard, Dr.**
**Stresemannstrasse 16**
**W-5210 Troisdorf(DE)**

## Beschreibung

Die Erfindung betrifft ein Verfahren zum Herstellen von ein gefärbten dessinierten Flächengebilden auf Basis thermoplastischer Kunststoffe gemäß dem Oberbegriff des Anspruchs 1.

Uni gefärbte, homogene Flächengebilde aus thermoplastischem Kunststoff, insbesondere aus PVC, in Gestalt von Bahnen oder Platten, mit Dicken über 1 mm, lassen sich nach dem Stand der Technik entweder über Extrusions-, Streich- oder Walzenverfahren herstellen, wobei ein einfarbiger, homogener Formkörper erhalten wird, der vom Design her einen kalten Plastiklook und ein typisches Kunststoffimage vermittelt. Selbst Mischungen verschiedener Granulate und deren Verarbeitung über Extrusions- oder Walztechnik haben zwar eine den eingesetzten Farben entsprechende Farbdifferenzierung ergeben, aber keineswegs das dem Kunststoff anhaftende kalte Feeling genommen. Insbesondere bei der Verwendung von Bahnen oder Platten als Bodenbeläge und Wandbeläge wird jedoch besonderer Wert auf den ästhetischen Eindruck gelegt. Hierbei ist es ein Anliegen der Erfindung, Flächengebilde aus thermoplastischen Kunststoffen zu schaffen, die einen ästhetisch ansprechenden optischen Eindruck vermitteln und die gegebenenfalls richtungslos gemustert werden können.

Aus der US-PS 3,359,352 und der DE-PS 12 98 023 ist ein gattungsgemäßes Verfahren zum Herstellen eines dekorativen Mehrschichtbelages bekannt geworden, bei dem Partikelchen mit einer Korngröße von etwa 2,5 mm bis 0,013 mm, hergestellt durch Mischen von PVC-Pulver und Weichmacher sowie Zusatzstoffen bei Temperaturen von etwa 93° C, d.h. gut unterhalb der Sintertemperatur des Kunststoffs, auf einer als Träger dienenden Substratbahn zu einer Schicht aufgeschüttet und zu einer porösen Bahn gesintert werden. Diese durch Mischen bei niedrigen Temperaturen weit unterhalb der Plastifizierungstemperatur des Kunststoffes hergestellten Partikelchen, auch als Dryblends bezeichnet, sind weich und weisen keine hohe Festigkeit und Formsteifigkeit auf, da sie nicht plastifiziert sind. Bei der nachfolgenden Verpressung fließen sie daher auseinander und ergeben bei Einsatz verschiedenfarbiger Partikel Mischfarben bzw. verlaufende Farbkonturen mit einer Orientierung in Walzrichtung. Bei diesem bekannten Verfahren ist es notwendig, ein Trägermaterial als Substratschicht zu verwenden. Homogene Flächengebilde, d.h. ohne Substratschicht durchgehend dessinierte Schichten, lassen sich somit nicht herstellen.

Auf Grund der weichen Partikel der Dryblends können auch nur Beläge mit geringen Dicken unter 1 mm lunkerfrei gefertigt werden, so daß die Beläge gemäß US-PS 3,359,352 mit einer unterseitigen zusätzlichen Trägerschicht heterogen aufgebaut sind.

Der Erfindung liegt die Aufgabe zugrunde, ausgehend von dem gattungsgemäßen Verfahren gemäß US-PS 3,359,352, homogene Flächengebilde mit klarer Musterung und feinstrukturierter richtungsloser Dessinierung zu schaffen.

Diese Aufgabe wird erfindungsgemäß bei einem gattungsgemäßen Verfahren durch die kennzeichnenden Merkmale des Anspruchs 1 gelöst. Als Formkörper in Sinne der vorliegenden Erfindung werden Extrudate, Granulat, Regenerat, Chips oder andere Formköper angesehen.

Es wurde nun überraschend gefunden, daß es mit der erfindungsgemäßen Verfahrenstechnik möglich ist, eine unendliche Vielzahl an durchgefärbten und durchdessinierten homogenen Flächengebilden, wie Bahnen oder Platten herzustellen, die die bisherigen Marmorierungen oder Dessinierungsstrukturen, denen enge Grenzen gesetzt sind, in freier Auswahl und Anmutung des Dessins weit übertrifft und damit neue Möglichkeiten schafft.

Die erfindungsgemäß eingesetzten Partikel besitzen eine feste körnige Struktur, im Gegensatz zu Dryblends-Pulvern, und diese körnige Struktur bleibt beim Sintern erhalten und ermöglicht die gewünschte Porösität für den nachfolgenden Farbauftrag und eine gute Penetrierung desselben. Diese Körnigkeit verhindert auch das Verlaufen der aufgedruckten Muster in der Fläche. Nach einer Ausgestaltung der Erfindung werden die Partikel in Form einer Kornmischung mit Korngrößen von 0 bis etwa 2 mm in einer beliebigen Kornverteilung verwendet und zu der zu sinternden Schicht aufgeschüttet. Um eine gute Porösität zu erhalten, sollte der Feinanteil an Partikeln im Verhältnis zur durchschnittlichen Größe der Hauptmenge der Partikel nicht zu hoch sein, damit kein Separieren der Kornmischung auftritt. Wenn der Feinanteil an Partikeln zu hoch ist, dann fallen diese nämlich durch die groben Körner hindurch und sammeln sich nur an der Unterseite an, wodurch eine ungleichmäßige Struktur und Dessinierung erhalten wird.

So erhält man nach dem erfindungsgemäßen Verfahren durch Auftragen von feinteiligen, thermoplastischen Stäuben und Körnungen von vorzugsweise 0,1 bis 2 mm Durchmesser auf eine Endlosunterlage, z.B. Stahlband oder temperaturbeständiges teflonisiertes Band, in Dicken bis zu mehreren mm und anschließendem Sintern unter Wärmeeinwirkung eine poröse Schicht, die durch einen Druck- oder auch Spritzvorgang durch die gesamte Schichtstärke mit einem beliebigen Dessin versehen und ggf. nach entsprechendem Trocknen - falls es sich um ein lösungsmittelhaltiges Farbsystem handeln sollte - thermisch und unter

EP 0 228 654 B1

Anpreßdruck zu einer in der gesamten Stärke durchgehend dessinierten, homogenen Bahnenware gestaltet werden kann.

Es wurde überraschend gefunden, daß thermisch vorbehandelte Partikel in Kornmischungen bestimmter Größenordnung im Sinterverfahren mit anschließender Pressung zu Flächengebilden führt, die eine polychrome, feinstrukturierte, durchgehende Dessinierung erhalten, die nichts mehr mit der bisher gewohnten Kunststoff-Uniformität gemein hat. Bereits bei Verwendung von nur in einer Farbe eingefärbten Partikeln einer Kornmischung beliebiger Kornverteilung, erhält man eine polychrome differenzierte Farbgebung. Bei Verwendung von nur wenigen verschieden mehrfarbig dessinierten Partikeln und durch unterschiedlichen Mischungsanteil in der Mischung bezüglich Korngröße und Kornverteilung sind unendlich viele Farb- und Strukturnuancierungen möglich.

Bevorzugt werden erfindungsgemäß Kornmischungen von Partikeln aus Schleifstaub und/oder feingemahlenem Agglomerat, Granulat, Chips, Regenerat, Extrudat oder dergleichen eingesetzt. Die aus diesen Partikeln hergestellten angesinterten porösen Schichten können dann teil- oder ganzflächig mit Farbauftrag versehen werden.

Nach einer Ausgestaltung der Erfindung werden durch Schleifen hergestellte Partikel, die eine Mischung von verschiedenen Korngrößen in regelloser Verteilung bilden, für die Herstellung der Bahnen oder Platten verwendet. Beispielsweise ist es möglich, verschieden bunt eingefärbte Platten oder Bahnen aus PVC-Zusammensetzung mit Weichmacher, Füllstoffen, Stabilisatoren, Pigmenten, die z.B. als Bodenbeläge verwendet werden, mit einem Schleifband bestimmter Körnungen abzuschleifen, wodurch ein zunächst für das bloße Auge unifarben erscheinender Schleifstaub anfällt, von einer Korngröße von beispielsweise 0,1 bis 2 mm. Trägt man diesen Schleifstaub z.B. über einen Trichter mit einem vorderseitig verstellbaren Rakel auf ein sich kontinuierlich darunter bewegendes Trägerband, z.B. Trennpapier oder Stahlband auf und läßt danach den aufgeschichteten Schleifstaub unter einem IR-Feld oder in einem Wärmekanal ansintern, so erhält man eine poröse Schicht, die durch Drucken oder Spritzen durchgehend dessiniert werden kann und anschließend unter Druck zu einer homogenen lunkerfreien, über die Gesamtstärke durchgehend dessinierten Bahn oder Platte verformt werden kann, wobei die Struktur des Musters nicht verwischt oder verzerrt wird.

Dieses erfindungsgemäße Verfahren läßt sich durch Verwendung von nur wenig verschieden mehrfarbig dessinierten Rohfellen und durch unterschiedlichen Mischungsanteil der daraus hergestellten Schleifstäube derartig variieren, daß unendlich viele Farb- und Strukturnuancierungen möglich sind. Bevorzugt werden durch Schleifen hergestellte Körner oder Partikel in einer Kornmischung verwandt, bei denen der Anteil der Korngröße von 250 $\mu$m bis 800 $\mu$m, 60 bis 90 Gew.-% ausmacht.

Es konnte weiterhin überraschend gefunden werden, daß anstelle von Schleifstaub ebenfalls verschieden eingefärbte Agglomerate, z.B. in einem Mischer auf bestimmte Temperatur hochgerieben und in verschiedenfarbigen Abmischungen aufgetragen, zu einem analogen polychromen Uni-Dessin führen. Weiterhin ist es möglich, den Charakter der Agglomerate durch einen sich dem Mischen anschließenden Mahlvorgang in der Strukturierung zu verändern. Darüber hinaus sind auch Abmischungen zwischen Schleifstaub und Agglomerat möglich und ebenfalls Kombinationen zwischen gefüllten und ungefüllten Systemen, d.h. PVC-Zusammensetzungen mit und ohne Füllstoff, wobei noch durch den Einsatz von transparenten Kunststoff-Partikeln über den polychromen Charakter hinaus ein räumlicher Eindruck vermittelt wird. Derartige polychrome, homogene Platten oder auch Bahnen lassen sich aber nicht nur aus Schleifstaub, Agglomerat, sondern auch aus Regenerat, das aus verschiedenfarbigen Randstreifen, die zerhackt und gemahlen wurden, herstellen. Ebenso läßt sich aus entsprechend eingefärbten Granulaten, die gemahlen wurden, über das Sinter-Preß-Verfahren ein ähnlicher Effekt erzielen. Ebenso läßt sich auch gemischtes PVC-Pulver mit Zusätzen über einen Plastifikator oder Extruder plastifizieren und zu Granulat oder Chips oder Scheibchen verarbeiten und die über Mühlen zu dem gewünschten Feinkorn, d.h. Feinkornmischung, vermahlen. Man kann die PVC-Zusammensetzungen transparent, uni oder auch verschiedenfarbig gestalten. Es können Gemische aus verschieden eingefärbten Stäuben und Körnungen eingesetzt werden. Dies ergibt nach dem Verpressen einen brillanten, fein aufgelösten, mehrfarbigen und nicht richtungsorientierten Grundton. Auch durch Korngröße und Kornverteilung der eingesetzten Partikel wird ein dezentes bis differenziertes Erscheinungsbild als Fein- oder auch Grobstruktur oder kleines bis großes Auflösungsvermögen erzielt.

Bevorzugt werden solche Mischungen der Agglomerate verwendet, die durch Mischen einer PVC-Zusammensetzung bei Mischtemperaturen bis zu etwa 17o° C, die durch Friktionswärme entsteht, mit nachfolgendem Abkühlen und Mahlen und ggf. Aussieben hergestellt werden. Eine solche Mischung von Agglomerat, die zu besonders angenehm anmutenden Design führen, weist z.B. einen Anteil von etwa 20 bis 75 Gew.-% der Korngröße von 500 bis 2000 $\mu$m in der Mischung auf.

Erfindungsgemäß kann durch Veränderung der Gestalt der Partikel, ob in Kornform, durch Schleifen

3

EP 0 228 654 B1

hergestellt oder durch Mahlen unterschiedlicher Größe, die Struktur der Bahn und damit das Design, d.h. der polychrome Eindruck verändert werden.

Nach einem weiteren Vorschlag gemäß der Erfindung werden die Partikel durch Zermahlen von Extrudat, Granulat oder Regenerat oder Chips oder Agglomerat oder Formkörpern erhalten, dabei können z.B. 1, 1,5 oder 2 mm Siebe zum Aussieben verwendet werden. Alle diese durch Mahlen hergestellten Kornmischungen enthalten thermisch vorbehandelte Partikel, die bereits schon einmal plastifiziert waren, und daher eine feste Körnerstruktur ergeben. Die thermische Vorbehandlung erfolgte beispielsweise bei der Herstellung des Agglomerates oder der Extrusion von Formkörpern, die zu Granulat, Chips, Randstreifen, Abfällen verarbeitet werden und das Ausgangsmaterial für die erfindungsgemäß herzustellenden und einzusetzenden Kornmischungen bilden.

Eine Mischung von Partikeln unterschiedlicher Herkunft, beispielsweise aus Mahlvorgängen, hat bevorzugt einen Anteil der Korngröße von 5oo bis 2ooo $\mu$m von etwa 3o bis 95 Gew.-%.

Darüber hinaus ist es möglich, Abmischungen von Partikeln verschiedener Herkunft, Einfärbungen, Strukturen und/oder Kornverteilungen zu verwenden.

Für eine gute Porösität, um eine gleichmäßige durchgehende Penetrierung zu erhalten, werden relativ gleichmäßige Korngrößen bevorzugt.

Besonders fein und gleichmäßig regellos dessinierte Bahnen oder Platten werden erhalten, wenn gemäß einem weiteren Vorschlag der Erfindung Kornmischungen enthaltend 90 bis 100 Gew.-% Anteil an Korngrößen von 300 bis 800 $\mu$m verwendet werden.

Nach einer weiteren Ausgestaltung der Erfindung werden insbesondere als Boden- und Wandbeläge zu verwendende Flächengebilde bei Anwendung des Verfahrens gemäß den Merkmalen des Anspruchs 8 erhalten. Hierbei entstehen transparente, transluzente bis durchgefärbte Bahnen.

Zur Herstellung von gefüllten Bahnen oder Platten kann in weiterer Ausgestaltung der Erfindung gemäß den Merkmalen des Anspruchs 9 verfahren werden.

Erfindungsgemäß können außer PVC auch andere thermoplastische Kunststoffe, wie z.B. Copolymerisat auf Basis Ethylen-Vinylacetat verwendet werden.

Unter PVC sollen im weiteren Sinne der Erfindung auch Copolymerisate mit Vinylacetat, Ethylenvinylacetat und ggf. Acrylatpolymerisate verstanden werden, die allein oder in Abmischungen verwendet werden können.

Für den Farbauftrag auf die angesinterte poröse Schicht werden bevorzugt flüssige ggf. eingefärbte Medien in Form von Pasten, wie PVC-Pasten, wässrige Polymerdispersionen oder in organischen Lösungsmitteln gelöste Polymere oder aufschmelzbare eingefärbte Polymerpulver eingesetzt. Die flüssigen Medien können hierbei in beliebiger Weise aufgebracht werden, bevorzugt werden sie aufgedruckt oder aufgespritzt. Der Druckvorgang erfolgt am einfachsten über eine Rotationssiebdruckanlage, wobei die Anzahl der Stationen die zusätzlich aufzubringenden Strukturen und Farben bestimmt. Die Dessinierung läßt sich natürlich ebenso über ein Spritzverfahren, seien es changierende Spritzpistolen oder auch im Takt arbeitende Spritzdüsen, wie beim Chromotronic- oder Millitronverfahren, bewerkstelligen. Es muß nur soviel Farbe in Form einer Lösung oder auch Paste aufgetragen werden, daß eine Penetration in die gewünschte Tiefe und damit Gesamtstärke der Bahn erfolgen kann. Bezüglich der Druckfarben lassen sich sowohl Farblösungen als auch wässrige Farbdispersionen oder auch Farbpasten, wie z.B. bei Verwendung von Körnungen aus Weich-PVC, auch eingefärbte PVC-Pasten verwenden.

Bevorzugt werden mehrere verschiedenfarbige flüssige Medien nacheinander auf verschiedene Teilflächen der angesinterten Bahn mustermäßig aufgetragen. Hierbei muß nicht die gesamte Bahnoberfläche gemustert werden, da auch die gesinterte Grundbahn nach dem Verpressen selbst wiederum unifarbene oder polychrome Farbeffekte zeigt. und damit zusammen mit den aufgetragenen Farben das gewünschte Design ergibt.

In der Art und Auswahl der Dessinierungen sind damit bei homogenen Belägen mit über die ganze Dicke der Bahn durchgehenden Dessinierung nach dem erfindungsgemäßen Verfahren erstmalig keine Grenzen mehr gesetzt.

Konnte man bisher nur mehr oder weniger längsorientierte oder chipsähnliche Strukturen erzielen, so kann man jetzt Dessinierungen von einer geometrischen Struktur von Linien und Kreisen bis zu phantasievollen Druckbildern, die dem Stand der Drucktechnik entsprechen, weitgehend realisieren. Darüber hinaus erhalten alle nach dem erfindungsgemäßen Verfahren dessinierten und strukturierten Homogenbeläge ein ganz anderes Feeling im Aussehen. Es ist nicht mehr eine auf eine Kunststoffoberfläche gedruckte, kalte Struktur, sondern ein Wärme ausstrahlendes Erscheinungsbild, wie man es sonst nur von Naturprodukten oder Textilen her kennt.

Das erfindungsgemäße Verfahren bietet sich ganz besonders für eine richtungsweisende Entwicklung textiler Dessinierungen und Strukturierungen bei Kunststoffen an. Durch Korngröße und Verteilung der

4

eingesetzten Thermoplaste wird ein dezentes bis differenziertes Erscheinungsbild, eine Fein- oder auch Grobstruktur oder auch ein kleines oder auch großes Auflösungsvermögen erzielt.

Durch das erfindungsgemäße Verfahren wird eine lebendige und auch räumliche Anmutung erzielt, wobei das bedruckte Substrat je nach farblicher Einstellung von der mono- bis zur polychromatischen Wirkung in Kombination mit einem ggf. vielfarbigen Druckvorgang eine bisher nicht gekannte Farb- und Raumdimension ergibt.

Für das Druckbild sind beim Siebdruck Rastergröße, Art der Druckfarben, Dispersionslösungen und Pasten sowie die Viskosität derselben von großer Bedeutnyng.

Nach einem weiteren Vorschlag der Erfindung wird die angesinterte Bahn vor dem Auftrag der flüssigen Medien auf eine Temperatur unterhalb 5o° C, vorzugsweise unterhalb 35° C abgekühlt. Damit ist das einwandfreie Penetrieren des Farbauftrages gewährleistet und beispielsweise ein vorzeitiges Verdunsten von Lösungsmitteln oder Verstopfen der Poren unterbunden. In Weiterbildung des erfindungsgemäßen Verfahrens wird dann vorgeschlagen, die angesinterte,mit Farbauftrag versehene Schicht zum Verdichten auf eine Temperatur von mindestens 15o° C, vorzugsweiseüber 165° C zu erwärmen.

Eine bevorzugte Verfahrensweise zum Herstellen von durchdessinierten Flächengebilden aus thermoplastischen Kunststoffen sieht erfindungsgemäß vor, daß die Partikel zu einer Schicht mit einer Dicke von vorzugsweise 5 bis 12 mm aufgeschüttet und auf Temperaturen bis zu etwa 21o° C erwärmt und dabei angesintert werden, dann die angesinterte Schicht ggf. auf eine Temperatur unterhalb 5o° C abgekühlt, und anschließend die flüssigen farbigen Medien in einem Flächengewicht von etwa 1oo bis 9oo g/m², vorzugsweise etwa 1oo bis 5oo g/m², nacheinander durch Spritzen oder Drucken aufgetragen und ggf. das enthaltende Lösungsmittel verdunstet und die angesinterte mit Farbauftrag versehene Schicht auf eine Temperatur von mindestens 15o° C, vorzugsweise über 165° C erwärmt und bei einem Flächendruck im Bereich von etwa o,2 bis 2o N/mm² bzw. einem entsprechenden Liniendruck im Walzenspalt homogen zu einer Bahn einer Enddicke von etwa 1,5 bis 4 mm verpreßt wird.

Die Menge des Farbauftrages richtet sich insbesondere nach der Art des gewähltem Farbauftrages, d.h. ob Dispersion oder Lösung oder Paste. Desweiteren richtet sich die Menge nach der Dicke der porösen Schicht und der Musterung.

Als Transportbandmaterialien lassen sich solche einsetzen, von denen die fertige Bahn ohne Schwierigkeiten wieder abgezogen werden kann, wie Trennpapier, teflonisierte Gewebe oder auch Metallbänder, wie z.B. Stahlband. Die zur Sinterung erforderliche Wärmeenergie läßt sich über IR-Strahler, Warmluft oder auch im Hochfrequenzfeld erzielen, wobei die abschliessende Komprimierung kontinuierlich über Walzwerke, Einfach- oder Doppelbandpressen erfolgen kann. Je nach Oberflächenstruktur der Walzen oder Bänder lassen sich entsprechende Oberflächen prägen, wobei die Prägetiefe vorzugsweise bis etwa 1oo μm oder auch mehr betragen kann.

Wenn auch Flächengebilde auf Basis von PVC die bevorzugten thermoplastischen Kunststoffe, schon wegen der Preiswürdigkeit, insbesondere für Massenprodukte wie Bodenbeläge und Wandbeläge sind, so ist die Erfindung in der Anwendung nicht auf diese beschränkt. Auch die jeweils geeigneten Weichmacher, Stabilisatoren und Füllstoffe richten sich nach der Kombination der Materialien und dem Verwendungszweck.

Die Erfindung wird nachfolgend anhand der Zeichnung und anhand von Beispielen näher erläutert.

Es zeigen

Figur 1        das Schema einer Anlage mit Sinterstrecke, Farbauftrag und Verdichtung
Figur 2        das Schema der Verdichtung mittels Preßwalzen
Figur 3        das Schema des Verdichtens mittels Bandpressen
Figur 4        das Schema des Verpressens mittels Doppelbandpresse
Figur 5        Farbauftragestationen Querschnitt
Figur 6        die Phasen einer Mehrfachbedruckung mittels Siebflachdruckschablonen gem. Fig. 5
Figur 7 - 11   verschiedene Designs entsprechend verschiedenen Kornmischungen und Farbaufträgen

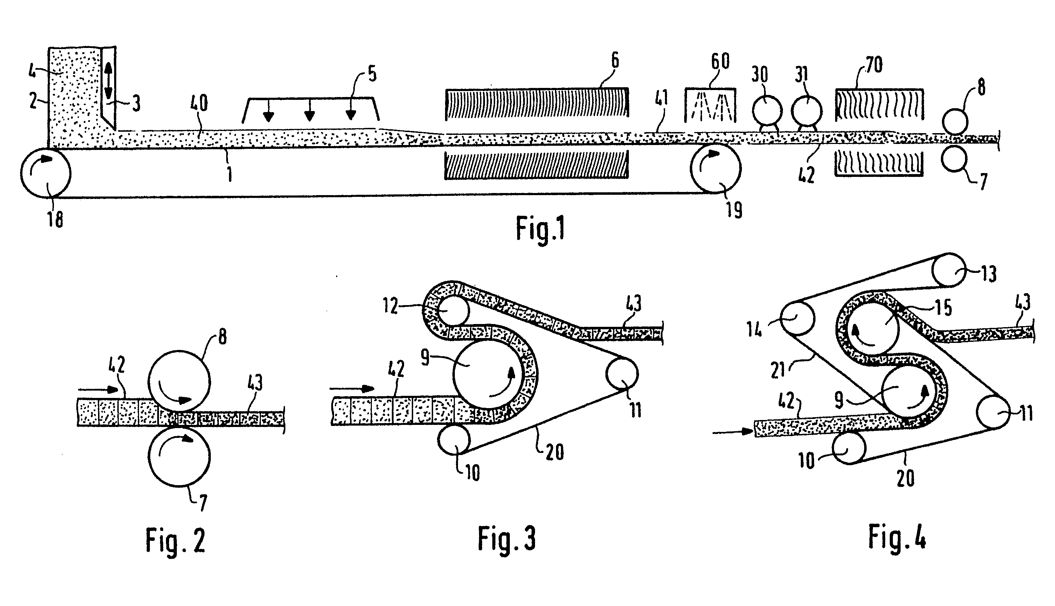

Das erfindungsgemäße Verfahren wird gemäß der Schemaskizze von Figur 1 erläutert. Als Träger wird bevorzugt ein endlos über zwei Umlenkrollen 18,19, von denen mindestens eine angetrieben ist, umlaufendes Transportband 1 verwendet. Als Träger lassen sich bevorzugt Release - papier, Stahl oder auch Teflon (Polytetrafluorethylen) - Bänder einsetzen. Auf das Transportband 1 wird über den Trichter 2 mit verstellbarem Rakel 3 die aufzutragende Kornmischung 4 je nach gewünschter Enddicke des Flächengebildes, vorzugsweise in 5 bis 12 mm Dicke (für Bodenbeläge),geschichtet.Es können auch andere Auftragssysteme,beispielsweise Dosierrinnen oder Walzenrakel, benutzt werden. Diese Schicht 4o wird dann kontinuierlich unter einem beispielsweise Infrarotfeld 5 und/oder einem Wärmekanal 6, in letzterem von oben und unten,erwärmt bis zur Plastifizierungstemperatur und zu einem durchgehenden Flächengebilde 41 gesintert. Bei diesem Sintervorgang verliert die Schicht 4o an Volumen und die Dicke verringert sich entsprechend

5

auf etwa 4 - 10 mm.

Beim kontinuierlichen Fertigungsprozeß läßt man nach dem Sintern die Sinterbahn 41 abkühlen, beispielsweise beim Durchlaufen der Kühlstation 6o, wobei beispielsweise mittels Luftduschen gearbeitet wird, bevor die Bahn in den Farbauftragsstationen 3o,31 dessiniert wird. Die Anzahl der Auftragsstationen 3o,31 richtet sich nach dem gewünschten Design und ebenso die Art der Auftragsstation, diese bestimmen Strukturen und Vielfarbigkeit der Dessinierungen und die jeweilige Rastergröße der Rotationsschablonen das aufzutragende Volumen der Farbmedien.

Als Farbmedien können lösungsmittelfreie Systeme, wie beispielsweise PVC-Pasten oder auch wässrige Polymer-Dispersionen oder auch in organischen Lösungsmitteln gelöste Polymere eingesetzt werden. Man kann aber auch mit einer erwärmten Polymerschmelze sowie mit eingefärbten Polymeren-Pulvern arbeiten. Die Schmelze bedingt eine zwischenstationäre Kühlstrecke und der Pulverauftrag sowohl Heiz- und Kühlzone zwischen den einzelnen Stationen. Dagegen kann mit den bei Normaltemperaturen flüssigen Systemen naß in naß gearbeitet werden. Anschließend wird die eingefärbte Sinterbahn 42 durch ein Wärmefeld 7o zum ggf. Trocknen des Farbauftrages und Erwärmen für das Verdichten geführt.

Nach den Farbauftragsstationen durchläuft die mit dem Farbmedium penetrierte Bahn 42 eine Preß-Station, beispielsweise ein Prägewalzenpaar 7,8 , wobei die Bahn 42 komprimiert und oberflächenmäßig geglättet oder auch sehr fein geprägt wird. Dann verläßt das Endprodukt 43 die Anlage und wird der Konfektionierung zugeführt.

In der Figur 2 ist schematisch eine Preß - und Prägeeinheit mit Gummiwalze 7 und Metallwalze 8 dargestellt. Zur Kompression der Sinterbahn mit Farbauftrag 42 kann ebenso auch, wie in der Figur 3 dargestellt, eine Bandpresse verwendet werden, wobei das über die Umlenkwalze 1o,11,12 endlos umlaufende Band so geführt ist, daß die gesinterte Bahn 42 über eine vorgegebene Wegstrecke an die Bandwalze 9 angedrückt und nach dem Abkühlen von dem Band 2o als Fertigbahn 43 abgezogen wird. Vorzugsweise wird, wie in der Figur 4 schematisch dargestellt, für die Kompression eine Doppelbandpresse verwendet, die mit zwei über Umlenkrollen 1o,11 bzw. 14,13 endlos umlaufenden Bändern arbeitet, mit denen die Sinterbahn 42 an die Bandwalze 9 bzw. 15 alternierend angepreßt wird und nach dem Abkühlen und der Verdichtung von dem Band 2o abgezogen wird. Die Oberfläche der Bahn 43 kann entweder in der Bandpresse oder auch zum Beispiel durch eine dahinter folgende Prägestation oder auch durch einen Schleif- und/oder Poliervorgang veredelt werden.

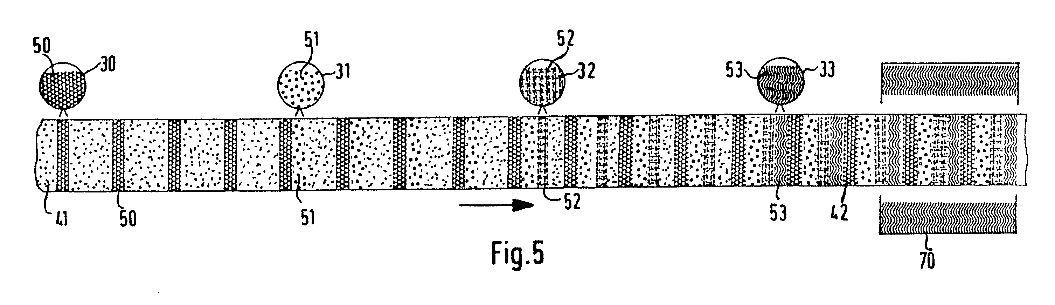

In der Figur 5 ist in vergrößerter Darstellung die Farbauftragsstation dargestellt. In dem Beispiel sind vier Farbauftragsstationen 3o bis 33 vorgesehen, die mit verschiedenen Farben 5o bis 53 gefüllt sind. Die Farben bzw. Farbmedien 5o bis 53 können in die poröse, offenporige Sinterbahn 41 eindringen und penetrieren bis auf die Gegenseite durch, so daß das Druckbild in der gesamten Dicke durchgehend wiedergegeben wird. Nach dem Aufbringen der Farbmedien und Penetrieren derselben wird bei Verwendung von wässrigen oder lösungsmittelhaltigen Farbmedien zunächst im Wärmekanal 7o getrocknet und dann bei höheren Temperaturen, die am Ende des Wärmekanals auf die mit Farbauftrag versehene Sinterbahn 42 einwirken, die zum Prägen erforderlichen Temperaturen erreicht. Daran schließt sich die Prägestation, wie in den Figuren 2 bis 4 gezeigt, an. Hier wird die Bahn 42 verdichtet und die Oberfläche geprägt.

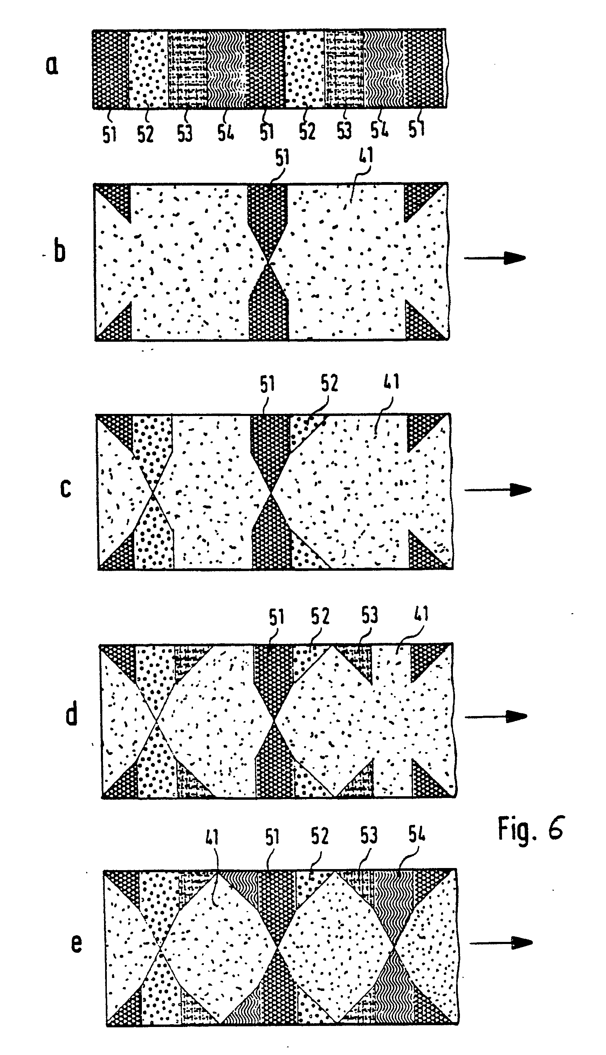

In der Figur 6 ist die Aufsicht auf die Farbauftragsstationen gemäß Figur 5 dargestellt und die einzelnen Dessinierungsschritte beispielhaft in den einzelnen Phasen veranschaulicht. Hierbei zeigt Figur 6a die dessinierte Bahn im Querschnitt mit den verschiedenen, vollständig durchpenetrierten Farben 51 bis 54. Man kann die Anzahl der Druckvorgänge beliebig ausführen, es können beispielsweise auch sechs Farben und Designs aufgedruckt werden. In den Möglichkeiten der einzelnen Druckbilder besteht eine freie Auswahl. Die Figur 6b zeigt den Aufdruck der ersten Farbe 51 auf die poröse Sinterbahn 41, die Figur 6c den Aufdruck der zweiten Farbe 52, die Figur 6d den Aufdruck der dritten Farbe 53 und die Figur 6e den Aufdruck der vierten Farbe 54. Es können auch Flächen von Farbauftrag frei bleiben, da bei eingefärbtem oder transparentem oder transluzentem Grundmaterial der Sinterbahn 41 auch hier ein zusätzlicher Dessinierungseffekt auftritt. In jedem Fall ist das aufgebrachte Muster vollständig über die Dicke der Bahn vorhanden, so daß im Gebrauch bei Abnutzung und Abrieb, z.B. als Bodenbelag, das Oberflächendesign nicht verloren geht. Damit ist eine solche Bahn praktisch zu 1oo% abnutzbar, ohne daß das Muster verloren geht.

Die nachfolgenden Beispiele stellen mögliche Ausführungen des erfindungsgemäßen Verfahrens und der Herstellung und Verwendung von Kornmischungen und Farbmedien dar.

Beispiel 1

Ein Grundansatz aus gefülltem Weich-PVC mit folgenden Anteilen

```
31 Gew.-Teile  PVC-Vinnol Y 68 (Firma
                               Wacker-Chemie)
13 Gew.-Teile  Dioctylphthalat
25 Gew.-Teile  Kreide
0,15 Gew.-Teile  Stabilisator auf  Sn -Basis
```

wird zunächst gemischt und jeweils 7o Gew.-Teile dieses Ansatzes separat mit folgenden Farbpigmenten versetzt und nach dem Mischen über einen Extruder granuliert:

| Farb.-Nr. | Farbe: | Gew.-Teile |
|---|---|---|
| 1 | mittelbraun | o,7 |
| 2 | hellbraun | o,987 |
| 3 | beige-grünlich | 1,337 |
| 4 | dunkelbraun | o,252 |

Extrusionstemperatur 17o° C, Granulat 4-5 mm ø

Die Granulate werden danach nochmals in folgenden Gewichtsverhältnissen Farb.-Nr. 1:2:3:4 = 1:1:1:o,76 gemischt und über Extruder und Walzwerk zu einer marmorierten Bahnenware verarbeitet. Beim Kalibieren durch Schleifen mit Bändern von 5o-er und 1oo-er Schleifkorn fällt ein Schleifstaub folgender Kornverteilung an (Naßsiebung):

| mm | | % |
|---|---|---|
| | o,04 | o,7 |
| o,04 - | o,063 | o,4 |
| o,063 - | o,1 | o,2 |
| o,1 - | o,125 | o,9 |
| o,125 - | o,2 | 2,0 |
| o,2 - | o,25 | 7,8 |
| o,25 - | o,315 | 16,4 |
| o,315 - | o,5 | 35.5 |
| o,5 - | o,8 | 32,5 |
| o,8 - | 1,o | 3,1 |
| 1,o - | 1,6 | o,4 |
| 1,6 - | 2,o | o,1 |

Der so erhaltene Schleifstaub wird über einen Trichter mit in der Höhe verstellbarem Rakel bei einer Spalteinstellung von 5 mm auf eine Trennpapierbahn aufgetragen, unter einem Infrarotstrahler von 0,6 m Länge (7,5 KW) und durch einen 6 m langen Warmluftkanal bei Temperaturen von 16o bis 2o5° C und einer Geschwindigkeit von 1 m/Min. angesintert. Das angesinterte, abgekühlte Material wird anschließend mit einer 4-Farben Rotations-Siebdruck-Anlage mit eingefärbten PVC-Pasten bedruckt.

Die Pasten hatten folgende Zusammensetzung:

```
27o Gew.-Teile    PVC Vinnol P 7o E
135 Gew.-Teile    PVC Vinnol C 65 V
164 Gew.-Teile    Linplast 68 P
  9 Gew.-Teile    Irgastab T 15o
  9 Gew.-Teile    Reoplast 39
 56 Gew.-Teile    Calcicoll SW 35
  4 Gew.-Teile    Minex 7
 48 Gew.-Teile    Edenol 19o
  1 Gew.-Teil     Farbe
```

Entsprechend der 4-Farben-Druckdessinierung und in Abstimmung auf den eingesetzten Schleifstaub wurden die 4 erforderlichen Pasten in jeweils mittelbraun, hellbraun, beige-grünlich und dunkelbraun eingefärbt. Als Dessin wurden textile Strukturen in einer Rastergröße von 4o mesh bedruckt. Die aufgedruckte PVC-Paste dringt danachentsprechend dem vorgegebenen Dessin durch die gesamte Dicke der angesinterten Schicht. Es kann bei diesem Verfahren naß in naß gearbeitet werden, ohne daß es zum Verschmieren der einzelnen Farben kommt. Die Pastenauftragsmenge betrug 58o g/m². Nach dem Dessindruck mit anschließender Penetration der Paste bis zur Rückseite der Sinterschicht wurde das Material durch einen Wärmekanal bei einer Temperatur von 18o bis 2oo° C und einer Geschwindigkeit von 2 m/Min. geleitet. Mit einem anschließendem IR-Feld von 7,5 KW wurde die Oberfläche zusätzlich erwärmt. Danach folgt in einer Prägestation Verdichtung der angesinterten Bahn bei gleichzeitiger Oberflächenprägung. Es entstand ein in der gesamten Bahnstärke von 2 mm durchgehendes textiles Druckdessin, wobei noch zusätzlich die Wirkung durch die polychrome Grundstruktur des Sintermaterials verstärkt wurde.

Das nach diesem Beispiel hergestellte angesinterte und dessinierte Bahnenmaterial ließ sich ebenfalls über eine Bandpresse bei ca. 17o° C verdichten und glätten.

Beispiel 2

Der aus Beispiel 1 erhaltene Schleifstaub wird mit einem aus einer anderen farblichen Kombination gewonnenen Schleifstaub B, der in folgender Zusammensetzung hergestellt wurde, im Verhältnis 1 : 1 gemischt:

| Farb.-Nr.: | Farbe: | Gew.-Teile: (auf 7o Teile Grundansatz) |
|---|---|---|
| 5 | dunkelgraubraun | o,24 |
| 6 | dunkelrotbraun | o,45 |
| 7 | mittelbraun | o,4 |
| 8 | beige-rötlich | 1,o |

Abmischung im Granulatverhältnis:
Farb.-Nr. 5 : 6 : 7 : 8 = 1 : 1 : 1 : o,76
Der Schleifstaub hatte folgenden Kornaufbau:

| mm | | % |
|---|---|---|
| | 0,04 | 0,9 |
| 0,04 - 0,063 | | 0,2 |
| 0,063 - 0,1 | | 0,2 |
| 0,1 - 0,125 | | 1,0 |
| 0,125 - 0,2 | | 3,9 |
| 0,2 - 0,25 | | 1o,3 |
| 0,25 - 0,315 | | 16,3 |
| 0,315 - 0,5 | | 42,7 |
| 0,5 - 0,8 | | 23,5 |
| 0,8 - 1,0 | | 0,8 |
| 1,0 - 1,6 | | 0,1 |
| 1,6 - 2,0 | | 0,1 |

Das Schleifstaubgemisch A und B aus zwei verschieden eingefärbten Bahnen mit insgesamt 8 Grundfarben wird in zu einer 7 mm dicken Schicht aufgeschüttet und angesintert.

Das danach abgekühlte Material mit reduzierter Stärke von 5 mm wird über einen Siebflachdruck und einer eingefärbten PVC-Dispersion dessiniert. Die Rastergröße betrug o,42 mm Durchmesser. Die eingesetzte PVC-Dispersion hatte folgende Zusammensetzung:

```
25o Gew.-Teile  Wasser
  5 Gew.-Teile  Ammoniumhydroxyd
25o Gew.-Teile  Vestolit Dispersion M
 15 Gew.-Teile  Byk NP 31oo
 15 Gew.-Teile  Etingal TP
 3o Gew.-Teile  Unimoll BB
2oo Gew.-Teile  Latecoll W 55
  6 Gew.-Teile  Disperbyk
17o Gew.-Teile  Colanyl-Oxydgelb G
13o Gew.-Teile  Colanyl-Oxydschwarz G
```

Die Auftragsmenge betrug 176 g/m$^2$ naß. Die Farbdispersion war entsprechend dem Druckbild durch die gesamte Schichtdicke penetriert. Die weitere Verarbeitung erfolgte wie im Beispiel 1.

Man erhält einen mit polychromer Grundstruktur und druckdessiniertem homogenen durchgehenden Dessin versehenen Formkörper.

Beispiel 3

Aus den nach dem Beispiel 1 hergestellten Bahnen können Randstreifen geschnitten, diese zu 5 bis 1o mm großen Chips zerkleinert und auf einer Alpinemühle mit einem 2 mm Sieb gemahlen werden.

Der Kornaufbau war:

| mm | | % |
|---|---|---|
| | 0,04 | 0,9 |
| 0.04 - 0,063 | | 1,0 |
| 0,063 - 0,1 | | 1,2 |
| 0,1 - 0,125 | | 1,4 |
| 0,125 - 0,2 | | 1,6 |
| 0,2 - 0,25 | | 1,2 |
| 0,25 - 0,315 | | 1,4 |
| 0,315 - 0,5 | | 4,8 |
| 0,5 - 0,8 | | 1o,7 |
| 0,8 - 1,0 | | 11,8 |
| 1,0 - 1,6 | | 22,4 |
| 1,6 - 2,0 | | 41,6 |

Das gemahlene Regenerat wurde angesintert und nach dem Abkühlen mit einem Flachdrucksieb und einer eingefärbten PVC-Dispersion analog Beispiel 2 dessiniert, getrocknet und abgepreßt. Der Farbauftrag betrug 480 g/m².

Die 2 mm starke Bahn war durchdessiniert und wies ebenfalls eine polychrome Grundstruktur auf.

Beispiel 4

Der entsprechend dem Beispiel 1 mit 1,5% hellgrünem Farbpigment versehene Grundansatz wurde gemischt und über einen Extruder granuliert, Temperatur 170° C, Granulat 4 bis 5 mm Durchmesser. Das Granulat wurde mit einer Pallmann-Mühle Type PP6, Spalt 0,5 mm gemahlen.

Die Kornverteilung war:

| mm | | % |
|---|---|---|
| | 0,04 | 0,6 |
| 0,04 | 0,063 | 0,3 |
| 0,063 | 0,1 | 0,3 |
| 0,1 | 0,125 | 1,3 |
| 0,125 | 0,2 | 3,3 |
| 0,2 | 0,25 | 5,5 |
| 0,25 | 0,315 | 9,2 |
| 0,315 | 0,5 | 29,8 |
| 0,5 | 0,8 | 29,5 |
| 0,8 | 1,0 | 12,3 |
| 1,0 | 1,6 | 5,7 |
| 1,6 | 2,0 | 2,2 |

Das gemahlene Material wurde entsprechend Beispiel 3 10 mm hoch aufgeschüttet, angesintert und im Siebflachdruck mit eingefärbter PVC-Paste entsprechend Beispiel 1 verarbeitet und nach Beispiel 1 abgepreßt.

Der Pastenauftrag betrug 700 g/m² und die Plattenendstärke 2,3 mm. Es entstand eine über die Gesamtstärke von 2,3 mm im Unigrundton gehaltene, in dunklerer Tönung durchdessinierte Bahn.

Beispiel 5

Das erfindungsgemäße Verfahren läßt sich nicht nur mit plastifiziertem Material, wie Granulat Regenerat oder Schleifstaub durchführen, sondern auch mit Agglomerat, das beim Mischprozeß gezielt gefertigt werden kann.

PVC Vinnol P 70, Weichmacher, Kreide, Stabilisator werden entsprechend Beispiel 1 unter separater Zugabe der Farbpigmente in einem Henschelmischer gemischt und durch Friktionswärme bis auf 140° C erhitzt und unter Rühren in einem abgetrennten Behälter abgekühlt und danach über eine Pallmann-Mühle mit 2 mm Sieb geschickt.

Der Kornaufbau war:

| mm | | % |
|---|---|---|
| | 0,04 | 0,6 |
| 0,04 - 0,063 | | 0,4 |
| 0,063 - 0,1 | | 0,9 |
| 0,1 - 0,125 | | 2,9 |
| 0,125 - 0,2 | | 11,3 |
| 0,2 - 0,25 | | 9,5 |
| 0,25 - 0,315 | | 10,0 |
| 0,315 - 0,5 | | 27,1 |
| 0,5 - 0,8 | | 27,9 |
| 0,8 - 1,0 | | 7,3 |
| 1,0 - 1,6 | | 1,8 |
| 1,6 - 2,0 | | 0,3 |

Das Mahlgut wurde entsprechend Beispiel 2, jedoch mit 5,5 mm Schichthöhe weiterverarbeitet. Dessiniert wurde mit einer Farbdispersion, wobei der Auftrag 524 g/m² betrug und das Flachdrucksieb einen vollflächigen Rasterdruck ermöglichte.

Die 2,25 mm starke Bahn war bei einem Uni-Grundton ebenfalls im Uniton durchdessiniert.

Beispiel 6

Entsprechend Beispiel 5 wurden 2 Agglomeratansätze in den Farben hellbraun und dunkelbraun hergestellt und mit einer Pallmann-Mühle PP6 gemahlen und im Verhältnis 1 : 1 gemischt.

Die Kornverteilung war:

| mm | | % |
|---|---|---|
| - 0,04 | | 1,1 |
| 0,04 - 0,063 | | 3,4 |
| 0,063 - 0,1 | | 5,7 |
| 0,1 - 0,125 | | 6,9 |
| 0,125 - 0,2 | | 17,2 |
| 0,2 - 0,25 | | 11,7 |
| 0,25 - 0,315 | | 11,2 |
| 0,315 - 0,5 | | 22,8 |
| 0,5 - 0,8 | | 16,2 |

| mm | | % |
|---|---|---|
| 0,8 - 1,0 | | 2,6 |
| 1,0 - 1,6 | | 0,8 |
| 1,6 - 2,0 | | 0,4 |

Die Mischung wurde mit einer Schichthöhe von 5,5 mm aufgegeben. Danach erfolgte das Ansintern.

Das abgekühlte gesinterte Material wurde im Siebflachdruck mit einer Farblösung dessiniert. Die Rezeptur der Farblösung war:

```
49,5  Gew.-Teile  Maragloss GOL
24,4  Gew.-Teile  Maragloss GO 045 braun
13,o  Gew.-Teile  Maragloss GO 021 gelb
 9,5  Gew.-Teile  Maragloss GO 070 weiß
 1,6  Gew.-Teile  Maragloss GO 036 rot
```

Die Auftragsmenge betrug 214 g/m² naß.

Das getrocknete Material wurde unter Druck bei 15o°C abgepreßt. Man erhielt eine im Grundton polychrom strukturierte, in braunem Farbton durchgehend dessinierte homogene Bahn.

Beispiel 7

Analog dem Beispiel 5 wurde ein Agglomerat ohne Kreide und Farbstoff hergestellt. Das Agglomerat wurde auf einer Alpine-Mühle mit 1,5 mm Sieb gemahlen.

Der Kornaufbau war:

| mm | % |
|---|---|
| - o,o4 | o,2 |
| o,o4 - o,o63 | o,9 |
| o,o63 - o,1 | 1,9 |
| o,1 - o,125 | 2,6 |
| o,125 - o,2 | 5,o |
| o,2 - o,25 | 4,2 |
| o,25 - o,315 | 4,8 |
| o,315 - o,5 | 15,3 |
| o,5 - o,8 | 33,1 |
| o,8 - 1,o | 23,4 |
| 1,o - 1,6 | 8,3 |
| 1,6 - 2,o | o,3 |

Das gemahlene Korngemisch wurde mit einer Schütthöhe von 6 mm aufgegeben und gesintert. Nach dem Abkühlen wurde die Bahn im Siebflachdruck mit mehreren gelb-rötlich eingestellten Farblösungen dessiniert.

Der Naßauftrag betrug 185 g/m².

Die Rezeptur war:

```
1oo  Gew.-Teile  Maragloss GOL
 2o  Gew.-Teile  Maragloss QNV
  5  Gew.-Teile  Ceresgelb 3 G
```

Das dessinierte Material wurde getrocknet und anschliessend zu einer 2 mm starken Bahn bei 15o°C verpreßt. Man erhielt eine transparente homogene Bahn die infolge der durchgehenden Dessinierung eine räumliche Wirkung vermittelt.

Beispiel 8

69 Gew.-Teile Escorene UL 00728 (Firma Esso)    1)

30 Gew.-Teile Juraperle MHM (Fa. Ulmer Füllstoffe)    2)

1 Gew.-Teil  Farbpigment-Farbstoff-Gemisch

1) Ethylen-Vinylacetat-Copolymerisat mit ca. 28 % Vinylacetat

2) Kreide

Escorene UL 00728 wurde bei 120°C auf einem Walzwerk vorplastifiziert, dann Füllstoff und Farbgemisch portionsweise innerhalb von 5 Minuten zugegeben und noch 10 Minuten gewalzt. Danach wurde das Walzfell abgenommen und im warmen Zustand in Abschnitte von ca. 6x6 cm vorzerkleinert. Die abgekühlten Abschnitte wurden auf einer Schneidmühle mit 1,2 mm Sieb gemahlen.

Die Kornverteilung war:

| mm | % |
|---|---|
| 0,25 | 5,5 |
| 0,25 - 0,315 | 1,0 |
| 0,315 - 0,5 | 5,5 |
| 0,5 - 0,8 | 16,7 |
| 0,8 - 1,0 | 25,1 |
| 1,0 - 1,25 | 34,2 |
| 1,25 - 1,6 | 11,7 |
| 1,6 - 2,0 | 0,3 |

Das so erhaltene Korn wurde mit anders pigmentiertem und gleichermaßen hergestelltem Material im Verhältnis von 1:1:1:1 gemischt. Danach mit einer Stärke von 6 mm auf ein Stahlband aufgerakelt und bei 200°C gesintert.

Ein Abschnitt des angesinterten und abgekühlten Materials mit reduzierter Stärke von 4,0 mm wurde über einen Siebflachdruck und mit einer eingefärbten Acrylat-Styrol-Dispersion dessiniert. Die eingesetzte Dispersion hatte folgende Zusammensetzung:

50 Gew.-Teile Wasser

3 Gew.-Teile Ammoniumhydroxid 25 %ig

400 Gew.-Teile Neocryl XK 70

22 Gew.-Teile Ethylglykol

8 Gew.-Teile Etingal TP

8 Gew.-Teile Entschäumer Byk NP 3100

25 Gew.-Teile Additol XW 330 7,5 %ig

95 Gew.-Teile Colanyl-Oxidgelb G

35 Gew.-Teile Colanyl-Oxidrot B

30 Gew.-Teile Colanyl-Oxidschwarz B

Die Auftragsmenge betrug 180 g/m² naß. Die Farbdispersion war entsprechend dem Druckbild durch die gesamte Schicht penetriert. Danach erfolgte die Trocknung.

Die dessinierte und getrocknete Bahn wurde anschließend unter einer Presse bei einer Temperatur von 110°C verdichtet. Man erhält einen mit polychromer Grundstruktur und druckdessinierten homogenen durchgehenden dessinversehenen Formkörper.

Beispiel 9

Die nach Beispiel 4 hergestellte und entsprechend Beispiel 3 gesinterte und bedruckte Bahn kann ebenfalls in einem Arbeitsgang über Infrarotstrahler und Glättwalzwerk kontinuierlich zu einem 3 mm dicken polychromen rauhen rutschfesten Belag mit geringerer Verdichtung durch entsprechende Kalibrierung im

EP 0 228 654 B1

Walzenspalt gefertigt werden. Man erhält dadurch einen Belag mit Tiefenwirkung und besonderem textilen Aussehen.

Analog läßt sich ebenfalls die nach Beispiel 8 gefertigte gesinterte Bahn über Walzenspalt kalibrieren und so ein rutschfester polychromer Belag herstellen.

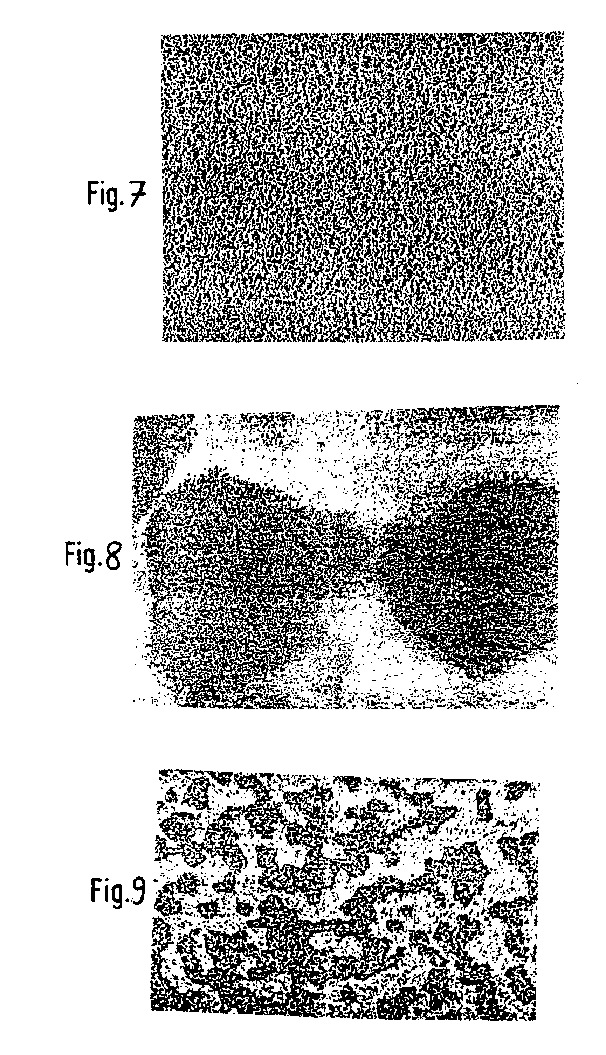

Die Figur 7 zeigt die Aufsicht auf die gesinterte poröse Bahn, die noch nicht verdichtet ist, gemäß Beispiel 1 in 1,3-facher Vergrößerung.

Figur 8 zeigt die Aufsicht auf ein Fertigprodukt gemäß Beispiel 1 mit einer freien Dessinierung.

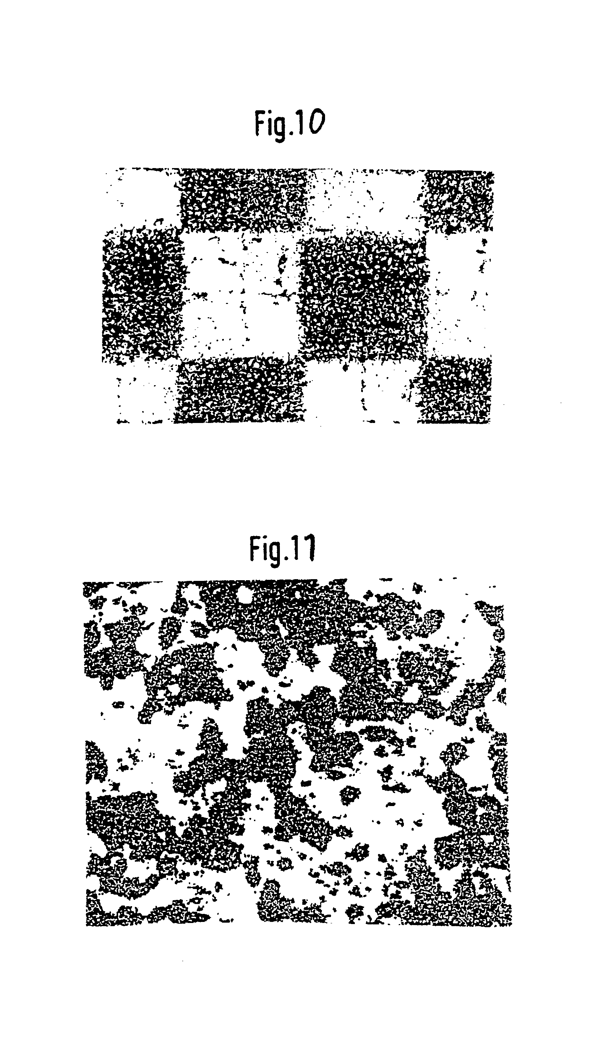

Figur 9 zeigt die Aufsicht auf ein Fertigprodukt gemäß Beispiel 3, Figur 10 zeigt die Aufsicht auf ein Fertigprodukt gemäß Beispiel 7 und Figur 11 zeigt die Aufsicht auf ein Fertigprodukt gemäß Beispiel 5.

Die in den Figuren 8 bis 11 dargestellten Designs von Bodenbelägen zeigen die mögliche Feinstrukturierung, die durch die Verwendung der spezifischen Kornmischungen ermöglicht wird, zumindest in den Grundzügen, da durch die Schwarz-Weiß-Wiedergabe natürlich der farbliche Eindruck und ein wesentlicher Teil der Farbnuancierungen verlorengeht.

## Ansprüche

1. Verfahren zum Herstellen von eingefärbten dessinierten Flächengebilden auf Basis thermoplastischer Kunststoffe, bei dem rieselfähige Partikel (4) zu einer gleichmäßigen Schicht (40) aufgeschüttet und unter Wärmeeinwirkung bis zur Plastifizierung des thermoplastischen Kunststoffes zu einer porösen zusammenhängenden Schicht (41) gesintert, danach ggf. gekühlt und dann mindestens ein flüssiges oder rieselfähiges aufschmelzbares, farbiges Medium (50 bis 53) in vorbestimmten Mustern aufgetragen wird, das in die poröse Schicht (41) bis zu der gewünschten Tiefe penetriert, und bei dem danach ggf. unter Einwirkung von Druck und Wärme die eingefärbte poröse Schicht (42) zu kompakten Flächengebilden (43) verdichtet wird, **dadurch gekennzeichnet,** daß die rieselfähigen Partikel (4) wenigsten teilweise durch mechanische Zerkleinerung von Formkörpern erzeugt werden und daß die rieselfähigen Partikel (4) ohne Verwendung einer Substratschicht unmittelbar auf ein Transportband (1) zu dar gleichmäßigen Schicht aufgeschüttet werden.

2. Verfahren nach Anspruch 1, dadurch gekennzeichnet, daß man eine Kornmischung von Partikeln (4) durch Schleifen von Bahnen oder Platten auf Basis der thermoplastischen Kunststoffe als Schleifstaub und/oder durch Feinmahlen von Agglomerat, Granulat, Chips, Regenerat, Extrudat oder dergleichen mit Korngrößen bis 2 mm gewinnt.

3. Verfahren nach Anspruch 2, dadurch gekennzeichnet, daß die durch Schleifen hergestellte Kornmischung einen Anteil von 60 bis 90 Gew.-% von Partikeln der Korngröße von 250 $\mu$m bis 800 $\mu$m enthält.

4. Verfahren nach Anspruch 2, dadurch gekennzeichnet, daß man einen Teil der Kornmischung aus Agglomeraten, die durch Mischen einer PVC-Zusammensetzung bei Mischtemperaturen bis zu 170° C mit nachfolgendem Abkühlen und Mahlen und Aussieben hergestellt werden und die einen Anteil von etwa 20 bis 75 Gew.-% der Korngröße von 500 bis 2000 $\mu$m enthalten, gewinnt.

5. Verfahren nach Anspruch 2, dadurch gekennzeichnet, daß man die Kornmischung aus gemahlenem, ausgesiebtem Regenerat, Granulat oder Chips gewinnt, wobei in der Kornmischung ein Anteil von etwa 30 bis 95 Gew.-% von Partikeln einer Korngröße von 500 bis 2000 $\mu$m enthalten ist.

6. Verfahren nach einem der Ansprüche 1 bis 5, dadurch gekennzeichnet, daß man die aufzuschüttende Schicht aus Abmischungen von Partikeln verschiedener Herkunft, Einfärbungen, Strukturen und/oder Kornverteilungen bildet.

7. Verfahren nach einem der Ansprüche 1 bis 6, dadurch gekennzeichnet, daß die Kornmischung von Partikeln eine Kornverteilung mit einem Anteil von 90 bis 100 Gew.-% einer Korngröße im Bereich von 300 bis 800 $\mu$m enthält.

8. Verfahren nach einem der Ansprüche 1 bis 7, dadurch gekennzeichnet, daß man aus einer PVC-Zusammensetzung enthaltend

14

60 bis 80,      vorzugsweise 65 bis 70 Gew.-% E, S, M-PVC mit einem K-Wert von 50 bis 80,

19 bis 39,      vorzugsweise 24 bis 34 Gew.-% Weichmacher, z.B. auf Basis Phthalsäureester, wie Diisooctylphthalat, Butylbenzylphthalat, und ggf. epoxidiertes Sojabohnenöl,

0,5 bis 2      Gew.-% Stabilisator auf Basis Barium-Cadmium, Calcium-Zink oder Zinnverbindungen,

0 bis 3      Gew.-% Farbmittel, wie lösliche und unlösliche Pigmente und organische und anorganische Füllstoffe

durch Plastifizieren bei Temperaturen oberhalb der Erweichungstemperatur, insbesondere etwa 140 bis 170°C, ein Ausgangsmaterial in Form von Formkörpern erhält, aus dem man durch Zerkleinern, wie Mahlen, Schleifen, die Kornmischung gewinnt.

9. Verfahren nach einem der Ansprüche 1 bis 7, dadurch gekennzeichnet, daß man aus einer PVC-Zusammensetzung enthaltend

40 bis 60      Gew.-% E, S, M-PVC mit einem K-Wert von 50 bis 80,

18 bis 24      Gew.-% Weichmacher, z.B. auf Basis von Phthalsäureestern wie Diisooctylphthalat, Butylbenzylphthalat und ggf. epoxidiertes Sojabohnenöl,

20 bis 40      Gew.-% Füllstoffe, wie Calciumcarbonat,

0,5 bis 2      Gew.-% Stabilisator, z.B. auf Basis Barium-Cadmium und/oder Calciumzink und/oder Zinnverbindungen,

0 bis 3      Gew.-% Farbmittel, wie lösliche und unlösliche Pigmente, organische und anorganische Farbstoffe

durch Plastifizieren bei Temperaturen oberhalb der Erweichungstemperatur, insbesondere etwa 130 bis 170°C, ein Ausgangsmaterial in Form Formkörpern, erhält, aus dem man durch Zerkleinern, wie Mahlen, Schleifen, die Kornmischung gewinnt.

10. Verfahren nach einem der Ansprüche 1 bis 9, dadurch gekennzeichnet, daß man aus der Kornmischung von Partikeln eine Schicht mit einer Dicke von etwa 5 bis 12 mm auf das Transportband aufschüttet und diese auf Temperaturen bis zu etwa 210°C erwärmt und sintert und danach auf eine Temperatur unterhalb 50°C abkühlt, anschließend die flüssigen farbigen Medien in einem Flächengewicht von etwa 100 bis 900 g/m², nacheinander durch Spritzen oder Drucken aufträgt und ggf. das enthaltende Lösungsmittel verdunstet und die angesinterte, mit Farbauftrag versehene Schicht auf eine Temperatur von mindestens 150°C, vorzugsweise 165°C erwärmt und bei einem Flächendruck im Bereich von etwa 0,2 bis 20 N/mm²-bzw. einen entsprechenden Liniendruck im Walzenspalt-homogen zu einer Bahn oder Platte einer Enddicke von etwa 1,5 bis 4 mm verpreßt.

11. Verfahren nach einem der Ansprüche 1 bis 10, dadurch gekennzeichnet, daß die flüssigen, ggf. eingefärbten Medien in Form von Pasten, wie PVC-Pasten, wäßrigen Polymerdispersionen oder in organischen Lösungsmitteln gelösten Polymeren eingesetzt werden.

12. Verfahren nach einem der Ansprüche 10 oder 11, dadurch gekennzeichnet, daß die flüssigen Medien aufgedruckt oder aufgespritzt werden.

13. Verfahren nach Anspruch 12, dadurch gekennzeichnet, daß die flüssigen Medien im Rotationsdsiebdruckverfahren aufgetragen werden.

14. Verfahren nach einem der Ansprüche 1 bis 13, dadurch gekennzeichnet, daß als thermoplastischer Kunststoff ein Copolymerisat auf der Basis von Ethylenvinylacetat verwendet wird.

15. Verfahren nach einem der Ansprüche 1 bis 14, dadurch gekennzeichnet, daß die Verpressung unter Einwirkung von Druck und Wärme im Walzenspalt mit geringer Verdichtung erfolgt, so daß ein rauhes, ggf. noch poröses Flächengebilde erhalten wird.

## Claims

1. Process for the production of single coloured patterned flat articles based on thermoplastic plastics, in which tricklable particles (4) are distributed to form a uniform layer (40) and are sintered under the effect of heat up to plasticisation of the thermoplastic plastics to form a porous cohesive layer, subsequently optionally cooled and then at least one flowable or tricklable meltable coloured medium (50 to 53) is applied in predetermined designs, which medium penetrates the porous layer (41) to the desired depth, and in which process, thereafter, the coloured porous layer (42) is compressed subsequently optionally under the action of pressure and heat, to form compact flat articles (43), characterised in that the tricklable particles (4) are produced at least partially by mechanical comminution of moulded articles and that the tricklable particles (4) are distributed directly onto a conveyor belt (1) to form the uniform layer without use of a substrate layer.

2. Process according to claim 1, characterised in that a granular mixture of particles (4) is obtained by abrasion of sheets or plates of thermoplastic plastics as grinding dust and/or fine powdering of agglomerate, granulate, chips, regenerate, extrudate or the like with particle sizes of up to 2 mm.

3. Process according to claim 2, characterised in that the granular mixture produced by abrasion contains an amount of 60 to 90% by weight of particles of particle size of 250 $\mu$m to 800 $\mu$m.

4. Process according to claim 2, characterised in that a part of the granular mixture is obtained from agglomerates which are produced by compounding of a PVC-composition at compounding temperatures of up to 170° C, with subsequent cooling and powdering and sieving, and which contain a portion of about 20 to 75% by weight having particle sizes of 500 to 2000 $\mu$m.

5. Process according to claim 2, characterised in that the granular mixture is obtained from powdered, sieved regenerated material, granulate or chips, with an amount of about 30 to 95% by weight of particles of a particle size of 500 to 2000 $\mu$m being contained in the granular mixture.

6. Process according to one of claims 1 to 5, characterised in that the distributed layer is formed from mixtures of particles of different origin, single colourations, structures and/or particle distributions.

7. Process according to one of claims 1 to 6, characterised in that the granular mixture of particles contains a granular distribution with a portion of 90 to 100% by weight of a particle size in the range of 300 to 800 $\mu$m.

8. Process according to one of claims 1 to 7, characterised in that there is obtained from a PVC composition containing

| | |
|---|---|
| 60 to 80, | preferably 65 to 70% by weight of E, S, M-PVC with a K-value of 50 to 80, |
| 19 to 39, | preferably 24 to 34% by weight of plasticiser, e.g. based on phthalic acid esters like dioctyl phthalate, butylbenzyl phthalate, and possibly epoxidised soya bean oil, |
| 0.5 to 2 % | by weight of stabiliser based on barium-cadmium, calcium-zinc or tin compounds, |
| 0 to 3 % | by weight of colourants like soluble and insoluble pigments and organic and inorganic fillers, |

by plasticisation at temperatures above the softening temperature, particularly about 140 to 170° C, a starting material in the form of shaped bodies from which the granular mixture is obtained by comminution, like grinding, abrasion.

9. Process according to one of claims 1 to 7, characterised in that there is obtained from a PVC composition containing

| | |
|---|---|
| 40 to 60% | by weight of E, S, M-PVC with a K value of 50 to 80, |
| 18 to 24% | by weight of plasticiser, e.g. based on phthalic acid esters like diisooctyl phthalate, butylbenzyl phthalate and optionally epoxidised soya bean oil, |
| 20 to 40% | by weight of fillers like calcium carbonate, |
| 0.5 to 2% | by weight of stabiliser, e.g. based on barium-cadmium and/or calcium-zinc and/or tin compounds, |
| 0 to 3% | by weight of colourants, like soluble and insoluble pigments, organic and inorganic dyes |

by plasticisation at temperatures above the softening temperature, in particular about 130 to 170° C, a starting material in the form of shaped bodies, from which the granular mixture is obtained by comminution, such as grinding, abrasion.

10. Process according to one of claims 1 to 9, characterised in that there is distributed on the conveyor belt a layer with a thickness of about 5 to 12 mm formed from the granular mixture of particles and this layer is heated to temperatures up to about 210°C and sintered and afterwards cooled to a temperature below 50°C, then the flowable coloured media are applied in a weight per unit area of about 100 to 900 g/m² one after another by spraying or printing and optionally the solvent present is volatilized and the sintered layer provided with colour application is heated to a temperature of at least 150°C, preferably 165°C, and compressed uniformly at a surface pressure in the range of about 0.2 to 20 N/mm² or a corresponding linear pressure in the gap of rollers - to a sheet or plate having a final thickness of about 1.5 to 4 mm.

**11.** Process according to one of claims 1 to 10, characterised in that the flowable, optionally single coloured media are employed in the form of pastes like PVC pastes, aqueous polymer dispersions or polymers dissolved in organic solvents.

**12.** Process according to one of claims 10 or 11, characterised in that the flowable media are printed or sprayed on.

**13.** Process according to claim 12, characterised in that the flowable media are applied in the rotary screen printing process.

**14.** Process according to one of claims 1 to 13, characterised in that an ethylene-vinylacetate copolymer is used as thermoplastic plastics.

**15.** Process according to one of claims 1 to 14, characterised in that the compressing takes place under the action of pressure and heat in the gap between rollers with slight compaction so that a crude, optionally still porous flat article is obtained.

## Revendications

**1.** Procédé pour la fabrication d'objets plans à motif, colorés dans la masse, à base de matière plastique thermoplastique, dans lequel des particules (4) fluides sont étalées en une couche (40) régulière et sont frittées sous l'action de la chaleur jusqu'à la plastification de la matière plastique thermoplastique en une couche (41) cohérente poreuse, puis le cas échéant refroidie, et au moins un produit coloré (50 à 53) liquide ou fluide, pouvant être fondu, est appliqué en motifs prédéterminés, qui pénètre dans la couche (41) poreuse jusqu'à la profondeur souhaitée, et dans lequel, la couche (42) poreuse colorée dans la masse est comprimée le cas échéant sous l'action de pression et de chaleur pour donner des objets plans (43) compacts **caractérisé** en ce que les particules (4) fluides sont produites au moins partiellement par broyage mécanique de corps moulés, et en ce que les particules (4) fluides sont étalées directement sur une bande transporteuse (1) sans utiliser une couche de substrat pour former la couche régulière.

**2.** Procédé selon la revendication 1, **caractérisé** en ce qu'on obtient un mélange de grains de particules (4), sous forme de poussières de meulage avec des dimensions de grains allant jusqu'à 2 mm, par meulage de bandes et de plaques à base de matière plastique thermoplastique, et/ou par broyage fin de produits agglomérés, de granulés de copeaux, de produits régénérés, de produits extrudés ou analogues.

**3.** Procédé selon la revendication 2, **caractérisé** en ce que le mélange de grains obtenu par meulage contient une proportion de 60 à 90% du poids de particules de dimension de grain comprise entre 250 $\mu$m et 800 $\mu$m.

**4.** Procédé selon la revendication 2, **caractérisé** en ce qu'on produit une partie du mélange de grains à partir de produits agglomérés, qui sont fabriqués par mélange d'une composition de PVC à des températures de mélange allant jusqu'à 170°C suivi d'un refroidissement, d'un broyage et d'un tamisage et qui contiennent une proportion comprise entre environ 20 et 75% du poids de particules de dimension de grain comprise entre 500 et 2000 $\mu$m.

**5.** Procédé selon la revendication 2, **caractérisé** en ce qu'on obtient le mélange de grains à partir de produits régénérés broyés et tamisés, de granulats ou de copeaux, le mélange de grains contenant une proportion d'environ 30 à 95% du poids de particules avec une dimension de grain comprise entre 500 et 2000 $\mu$m.

6. Procédé selon l'une des revendications 1 à 5, **caractérisé** en ce qu'on forme la couche à étaler à partir de mélanges de particules de provenances, de colorations, de structures et/ou de distributions de grains différentes.

7. Procédé selon l'une des revendications 1 à 6, **caractérisé** en ce que le mélange de grains de particules contient une distribution de grains avec une proportion de 90 à 100% du poids de dimension de grain comprise entre 300 et 800 $\mu$m.

8. Procédé selon l'une des revendications 1 à 7, **caractérisé** en ce qu'on obtient, à partir d'une composition de PVC comprenant

| | |
|---|---|
| 60 à 80, | de préférence 65 à 70% du poids E, S, M-PVC avec une valeur K de 50 à 80, |
| 19 à 39, | de préférence 24 à 34% du poids de plastifiant, par exemple à base de phtalate, tel que du phtalate de diisooctyle, du phtalate de butyle et de benzyle, et le cas échéant de l'huile de soja époxydée, |
| 0,5 à 2% | du poids de stabilisateur à base de baryum-cadmium, de calcium-zinc ou de composés d'étain, |
| 0 à 3% | du poids de colorant, tels que des pigments solubles et non solubles et des produits de remplissage organiques et anorganique, |

par plastification à des températures supérieures à la température de ramollissement, en particulier environ entre 140 et 170° C, un matériau de base sous forme de produit manufacturé à partir duquel on produit le mélange de grains par fragmentation, telle que broyage et meulage.

9. Procédé selon l'une des revendications 1 à 7, **caractérisé** en ce qu'on obtient à partir d'une composition de PVC comprenant

| | |
|---|---|
| 40 à 60% | du poids E, S, M-PVC avec une valeur K comprise entre 50 et 80, |
| 18 à 24% | du poids de plastifiant, par exemple à base de phtalate, tel que du phtalate de diisooctyle, du phtalate de butyle et de benzyle, et le cas échéant d'huile de soja époxydée, |
| 20 à 40% | du poids de matière de remplissage tel que du carbonate de calcium, |
| 0,5 à 2% | du poids de stabilisateur, par exemple à base de baryum-cadmium et/ou de calcium-zinc et/ou de composés d'étain, |
| 0 à 3% | du poids de colorants, tels que des pigments solubles et insolubles, des colorants organiques et anorganiques, |

par plastification à des températures supérieures à la température de ramollissement, notamment environ de 130 à 170° C, un matériau de base sous forme de produit manufacturé à partir duquel on produit le mélange de grains par fragmentation telle que broyage, meulage.

10. Procédé selon l'une des revendications 1 à 9, **caractérisé** en ce qu'on étend une couche d'une épaisseur comprise entre environ 5 et 12 mm du mélange de grains de particules sur la borne transporteuse, on chauffe celle-ci à des température allant jusqu'à environ 210° C, on la fritte et on la refroidit à une température inférieure à 50° C, puis on applique les produits colorés liquides à raison d'une quantité par unité de surface comprise entre environ 100 et 900 g/m², l'une après l'autre par pulvérisation ou par impression, et le cas échéant on évapore le solvant contenu, on réchauffe la couche frittée munie de son revêtement de peinture à une température d'au moins 150° C, de préférence 165° C et on la comprise avec une pression superficielle comprise entre environ 0,2 et 20 N/mm² ou avec une pression linéaire correspondante dans l'entrefer des cylindres pour donner une bande ou une plaque homogène d'une épaisseur finale comprise entre environ 1,5 et 4 mm.

11. procédé selon l'une des revendications 1 à 10, **caractérisé** en ce que les produits liquides éventuellement colorés sont utilisés sous forme de pâtes, telles que des pâtes de PVC, de dispersions de polymères dans de l'eau ou de polymères dissous dans des solvants organiques.

12. Procédé selon l'une des revendications 10 ou 11, **caractérisé** en ce que les produits liquides sont appliqués par impression ou par pulvérisation.

**13.** Procédé selon la revendication 12, **caractérisé** en ce que les produits liquides sont appliqués selon le procédé de sérigraphie rotative.

**14.** Procédé selon l'une des revendications 1 à 13, **caractérisé** en ce qu'on utilise comme matière plastique thermoplastique un copolymère à base d'acétate de vinyle/éthylène.

**15.** Procédé selon l'uen des revendications 1 à 14, **caractérisé** en ce qu'on réalise la compression sous l'action de pression et de chaleur dans l'entrefer des cylindres avec une faible compression de manière à obtenir un objet plan rugueux, le cas échéant encore poreux.

Fig.1

Fig. 2

Fig. 3

Fig.4

EP 0 228 654 B1

**Fig.5**

Fig. 6

Fig. 7

Fig. 8

Fig. 9

Fig.10

Fig.11